# EUROPÄISCHE PATENTSCHRIFT

(11) **EP 3 697 654 B1**
(45) Veröffentlichungstag und Bekanntmachung des Hinweises auf die Patenterteilung: **21.06.2023**
(21) Anmeldenummer: 18712523.2
(22) Anmeldetag: 09.03.2018
(51) Int. Cl.: B60T 13/66, B60T 17/22, B60T 13/26

(54) **REDUNDANZARCHITEKTUR FÜR SYSTEME DER HOCHAUTOMATISIERUNG**
REDUNDANCY ARCHITECTURE FOR SYSTEMS OF HIGH-LEVEL AUTOMATION
ARCHITECTURE REDONDANTE POUR SYSTÈMES HAUTEMENT AUTOMATISÉS

(30) Priorität: 16.10.2017 DE 102017218488
(43) Veröffentlichungstag der Anmeldung: 26.08.2020
(73) Patentinhaber: KNORR-BREMSE Systeme für Nutzfahrzeuge GmbH, 80809 München (DE)
(72) Erfinder: HECKER, Falk, 71706 Markgröningen (DE); MUSTAPHA, Adnan, 75433 Maulbronn (DE); JUNDT, Oliver, 74394 Hessigheim (DE)
(86) Internationale Anmeldenummer: PCT/EP2018/055985
(87) Internationale Veröffentlichungsnummer: WO 2019/076487

(56) Entgegenhaltungen:
- EP-A1- 2 570 317
- WO-A1-2017/017491
- US-B2- 8 282 173

## Beschreibung

Die vorliegende Erfindung bezieht sich auf ein Modul zur Bereitstellung von Steuersignalen für ein Bremssystem eines Fahrzeugs, ein Redundanzsystem zur Ergänzung eines elektronischen Bremssystems eines Fahrzeugs, ein elektronisch gesteuertes Bremssystem für ein Fahrzeug sowie ein Verfahren zum Betrieb dieses Bremssystems.

Fahrzeuge, insbesondere Nutzfahrzeuge, mit hochautomatisierten Fahrfunktionen, die dem Fahrer die Führungsaufgabe sowie die Führungsverantwortung mindestens für eine begrenzte Zeit abnehmen, müssen bei Auftreten eines beliebigen Fehlers die Fahrzeugführung solange fortsetzen, bis der Fahrer die Fahrzeugführung wieder übernommen hat. Daraus lässt sich eine Systemeigenschaft "Fail-Operational" ableiten, die erfordert, dass die Grundfunktionen des Fahrzeugs, insbesondere auf der Ausführungsebene, weiterhin gewährleistet sind. Dies bedeutet, dass eine Rückfallebene im Fahrzeug vorgesehen sein muss, die beispielsweise die Radbremsen in ähnlicher Weise ansteuert, wie es ein Primärsystem tun würde.

Fahrzeuge, insbesondere Nutzfahrzeuge, sind oftmals mit einem elektronischen Bremssystem (EBS) ausgestattet. Derartige Systeme weisen Module, sogenannte Fußbremsmodule, auf, die aus einem Bremsbefehl, der beispielsweise vom Fahrer über eine geeignet ausgebildete Schnittstelle, oder über ein Steuergerät eingebracht wird, elektronische Steuersignale erzeugen. Diese Steuersignale dienen beispielsweise der Ansteuerung von elektronisch geregelten Druckregelmodulen (elektropneumatischen Modulatoren, EPM) oder weiteren Modulen des EBS, die aus den Steuersignalen entweder direkt oder mithilfe weiterer Vorrichtungen Bremsdrücke erzeugen. Das EBS steht dabei elektronisch mit einer Steuervorrichtung in Verbindung, die sämtliche Elemente des EBS steuert bzw. überwacht. Die Informationen über den Betrieb des EBS werden beispielsweise über einen CAN-BUS, mit dem beispielsweise die Steuervorrichtung kommuniziert, an das Fahrzeug bzw. weitere Vorrichtungen des Fahrzeugs weitergegeben, und es werden darüber Informationen und Befehle an das EBS übersandt. Weiterhin ist üblicherweise eine Versorgungsquelle, beispielsweise ein elektrischer Batteriekreis, vorgesehen, die das EBS mit Energie versorgt. Die Steuerung des EBS erfolgt im Normalfall elektronisch.

Sollte es zu einem Ausfall der Versorgungsquelle kommen, ist die Steuervorrichtung nicht mehr in der Lage die elektronische Steuerung des EBS zu übernehmen. Ein weiterer Fehlerfall ist in einem Ausfall des EBS zu sehen, der bewirkt, dass das EBS keine Bremsdrücke mehr zur Verfügung stellen kann.

Üblicherweise ist in einem EBS eine pneumatische Rückfallebene vorgesehen, die in den beschriebenen Fehlerfällen den Betrieb des Bremssystems übernimmt. Das bedeutet, dass das Fußbremsmodul nun keine elektronischen Steuersignale, sondern üblicherweise pneumatische Steuersignale an die Druckregelmodule versendet. Die Druckregelmodule sind üblicherweise mit einer Rückfallebene ausgebildet, wodurch diese in der Lage sind, die alternativen Steuersignale, also die pneumatischen Steuersignale, in Bremsdrücke umzusetzen. Somit ist eine Grundfunktionalität des EBS weiterhin gewährleistet, und das Fahrzeug weiterhin beherrschbar. Dies gilt jedoch nur für den Fall, in dem der Fahrer die pneumatischen Drücke im EBS aufbringt.

Im Sinne der oben geforderten Systemeigenschaft "Fail-Operational" ist jedoch weiterhin zu fordern, dass das Fahrzeug in einem solchen Fehlerfall auch bei autonomen Fahrbetrieb, also wenn keine Fahrereingaben in das Fußbremsmodul zu erwarten sind, weiterhin elektronisch gesteuert, wenn auch möglicherweise mit funktionalen Einschränkungen, gebremst werden kann.

Eine pneumatische Rückfallebene sichert die "Fail-Operational"-Eigenschaft, wenn eine Kraft von außen, bspw. durch den Druck auf das Bremspedal durch einen Fahrer in das System eingebracht wird. Soll das System hinsichtlich autonomen Fahrbetrieb weitergebildet werden, so ist eine elektronische Rückfallebene nötig, da Steuerbefehle zumindest elektronisch ermittelt werden müssen.

Aus der EP 2 570 317 A1 ist ein elektromechanisches Bremssystem mit mindestens zwei elektrischen Energiequellen zur redundanten Energieversorgung bekannt.

Es ist daher Aufgabe der vorliegenden Erfindung, ein übliches elektronisch gesteuertes Bremssystem so zu erweitern, dass auch im Fehlerfall das Fahrzeug weiterhin elektronisch gesteuert gebremst werden kann.

Diese Aufgabe wird durch die unabhängigen Ansprüche gelöst. Vorteilhafte Weiterbildungen sind Gegenstand der Unteransprüche.

Erfindungsgemäß ist ein Modul zur Bereitstellung von Steuersignalen, insbesondere pneumatischen Steuersignalen, für ein Bremssystem eines Fahrzeugs vorgesehen, wobei das Bremssystem eine Versorgungsquelle aufweist. Das Modul weist mindestens eine Schnittstelle auf, die dazu ausgebildet ist, mit einem Druckspeicher, vorzugsweise mit einem anderen Modul, besonders bevorzugt mit einer Druckluftquelle, verbunden zu werden, wodurch das Modul mit Betriebsdruck versorgt wird. Die Druckluftquelle dient im Weiteren dazu, Druckluft zur Erzeugung von pneumatischen Steuersignalen für das Bremssystem zur Verfügung zu stellen.

Weiterhin ist mindestens eine Schnittstelle vorgesehen, die dazu ausgebildet ist, die Steuersignale an mindestens eine Verarbeitungseinheit zu übermitteln. Vorzugsweise handelt es sich bei den Verarbeitungseinheiten um pneumatische Druckregelmodule, besonders bevorzugt um elektropneumatische Ventile oder Druckregelmodule mit einer pneumatischen Rückfallebene.

Diese Module sind vorzugsweise dazu ausgebildet Bremsdrücke vorzugsweise für eine Achse des Fahrzeugs, besonders bevorzugt radindividuell, zur Verfügung zu stellen.

Das Modul ist zudem dazu ausgebildet, über eine weitere Versorgungsquelle versorgt zu werden. Dadurch ist vorteilhafterweise sichergestellt, dass das Modul nicht durch die Versorgungsquelle des restlichen Bremssystems versorgt wird. Die Versorgungsquelle, vorzugsweise ein zweiter Batteriekreis, stellt somit eine redundante Versorgungsquelle dar.

Vorzugsweise sind weiterhin Verarbeitungsmittel vorgesehen, welche ebenfalls über die weitere Versorgungsquelle versorgt werden und dazu ausgebildet sind, die Steuerung des Moduls durchzuführen.

Vorzugsweise sind diese Verarbeitungsmittel dazu ausgebildet das Modul elektronisch zu steuern. Dies wird durch die weitere Versorgungsquelle sichergestellt.

Die Verarbeitungsmittel weisen vorzugsweise eine elektronische Steuervorrichtung, besonders bevorzugt ein elektronisches Steuergerät auf, das mit weiteren Vorrichtungen, vorzugsweise über einen CAN-BUS des Fahrzeugs, in der Verbindung steht.

Vorzugsweise ist ferner mindestens eine Schnittstelle, die zum Empfang einer Bremseingabe ausgebildet ist, vorgesehen, worüber Bremseingaben beispielsweise eines Fahrers oder eines Steuergeräts empfangen werden können.

Vorzugsweise sind die Verarbeitungsmittel einstückig mit dem Modul ausgebildet.

So kann beispielsweise eine kompakte Einheit aus Modul und Verarbeitungsmittel geschaffen werden, welche in ein bestehendes Bremssystem integriert werden kann.

Vorzugsweise ist mindestens eine Schnittstelle an dem Modul vorgesehen, die dazu ausgebildet ist, Steuersignale eines ersten Moduls, insbesondere eines Fußbremsmoduls, zu empfangen, wobei vorzugsweise mindestens eine weitere Schnittstelle vorgesehen ist, die dazu ausgebildet ist, die Steuersignale des ersten Moduls an die mindestens eine Verarbeitungseinheit zu übermitteln.

Die Steuersignale des ersten Moduls können dabei vorzugsweise elektronisch und/oder elektrisch und/oder mechanisch und/oder hydraulisch und/oder pneumatisch ausgebildet sind.

Vorzugsweise ist das erfindungsgemäße Modul dazu ausgebildet, Fahrereingaben, besonders bevorzugt elektronisch, zu detektieren. Üblicherweise ist dazu das Fußbremsmodul ausgebildet, indem es beispielsweise Fahrereingaben, beispielsweise durch Ermittlung der eingebrachten Pedalverschiebung, elektronisch ermittelt.

Da das erfindungsgemäße Modul nicht durch die Versorgungsquelle des restlichen Bremssystems versorgt wird, sondern stattdessen separat durch eine weitere Versorgungsquelle versorgt wird, ist auch bei dem Ausfall der ersten Versorgungsquelle vorteilhafterweise eine elektronische Ermittlung der Fahrereingabe, nun durch das erfindungsgemäße Modul, möglich.

Vorzugsweise ist weiterhin mindestens eine Schnittstelle vorgesehen, die dazu ausgebildet ist, Eingaben eines Fahrers zu empfangen, um aus diesen anschließend Steuersignale zu bestimmen.

Die Schnittstelle ist dazu vorzugsweise so ausgebildet, dass sie die Fahrereingabe, insbesondere über ein Bremspedal, vorzugsweise elektronisch empfangen kann.

Alternativ kann die Fahrereingabe auch durch das Fußbremsmodul empfangen werden, welche daraus in Form von pneumatischen Steuerdrücken zur Verfügung gestellt werden.

So können in einem Fehlerfall, in dem lediglich die Versorgungsquelle des Fußbremsmoduls ausgefallen ist, trotzdem noch Fahrereingaben an das erfindungsgemäße Modul übertragen werden, wodurch gewährleistet ist, dass ein Fahrerwunsch auch weiterhin in eine Betätigung der Fahrzeugbremsen umgesetzt wird. Ferner kann vorteilhafterweise erreicht werden, dass Steuersignale des Fußbremsmoduls, welche in einem Fehlerfall, in dem beide Versorgungsquellen ausgefallen sind und somit keine elektronische Steuerung des Bremssystems mehr möglich ist, durch das Fußbremsmodul erzeugt werden, durch das erfindungsgemäße Modul geführt werden.

Das Modul, ist vorzugsweise dazu ausgebildet, die Steuersignale des Fußbremsmoduls zu blockieren und erst freizugeben, wenn auch die Versorgung des erfindungsgemäßen Moduls ausgefallen ist.

Dies kann vorzugsweise durch aktiv bestromte Ventile erfolgen, die im Fehlerfall, also bei Wegfall der Bestromung, öffnen.

Vorzugsweise ist die mindestens eine Schnittstelle, die dazu ausgebildet ist, die Steuersignale des ersten Moduls an die mindestens eine Verarbeitungseinheit zu übermitteln mit der mindestens einen Schnittstelle, die dazu ausgebildet ist, die Steuersignale an mindestens eine Verarbeitungseinheit zu übermitteln, identisch. Vorteilhafterweise kann dadurch erreicht werden, dass das Modul in ein bestehendes EBS vorzugsweise in dessen Rückfallebene, eingefügt werden kann, ohne dass zusätzliche Leitungen, insbesondere Steuerleitungen, vorgesehen werden müssen.

Erfindungsgemäß ist das Modul dazu ausgebildet, in einem ersten Fehlerfall Steuersignale des ersten Moduls, insbesondere des Fußbremsmoduls, zu blockieren und eigene Steuersignale an mindestens eine Verarbeitungseinheit zu übermitteln, und in einem zweiten Fehlerfall eigene Steuersignale zu blockieren und die Steuersignale des ersten Moduls an mindestens eine Verarbeitungseinheit zu übermitteln. Dabei handelt es sich vorzugsweise um nicht elektronische Steuersignale, besonders bevorzugt um pneumatische Steuersignale.

Vorteilhafterweise ist das Modul dazu ausgebildet, durch eine eigene Logik zu wählen, ob Steuersignale des Fußbremsmoduls weitergeleitet werden sollen, oder eigene Steuersignale generiert werden sollen.

Diese Entscheidung kann vorzugsweise auch mithilfe eines Auslösesignals erreicht werden, beispielsweise indem festgestellt wird, dass das EBS, insbesondere das Fußbremsmodul nicht mehr durch die Versorgungsquelle versorgt werden. Vorzugsweise ist der erste Fehlerfall durch einen Zusammenbruch der Versorgung des Bremssystems durch die erste Versorgungsquelle charakterisiert, und der zweite Fehlerfall durch einen Zusammenbruch der Versorgung des Bremssystems durch die weitere Versorgungsquelle charakterisiert.

Somit werden durch die Erfindung innerhalb des Bremssystems mehrere Rückfallebenen geschaffen, über die das Bremssystem im Fehlerfall weiter betrieben werden kann:

### Normaler Betrieb

In einer ersten Betriebsebene erfolgt die Steuerung des Bremssystems elektronisch gesteuert durch das Fußbremsmodul. Dieses erzeugt elektronische Steuersignale, die die Verarbeitungseinheiten, insbesondere die Druckregelmodule, dazu veranlassen, pneumatische Bremsdrücke zu erzeugen.

### Erster Fehlerfall

In einem ersten Fehlerfall, der durch den Ausfall der ersten Versorgungsquelle charakterisiert ist, ist eine elektronische Steuerung des Bremssystems durch das Fußbremsmodul nicht mehr möglich. Die weiteren Verarbeitungseinheiten sind nicht mehr in der Lage elektronische Steuersignale zu verarbeiten, da sie ebenfalls nicht mehr durch die erste Versorgungsquelle versorgt werden. Stattdessen sind diese in der Lage in einer Rückfallebene vorzugsweise aus pneumatischen Steuersignalen Bremsdrücke zu generieren. Diese Steuersignale können durch das erfindungsgemäße Modul elektronisch gesteuert zur Verfügung gestellt werden. Dieses wird weiterhin durch die weitere Versorgungsquelle versorgt und kann pneumatische Steuersignale elektronisch zur Verfügung stellen. Somit besteht die Möglichkeit, in einer ersten Rückfallebene weiterhin eine elektronische Steuerung des Bremssystems zu realisieren und somit vorteilhafterweise auch weiterhin Steuerfunktionen, wie eine ABS-Steuerung zu realisieren.

### Zweiter Fehlerfall

In einem zweiten Fehlerfall ist auch die zweite Versorgungsquelle ausgefallen, wodurch somit keine elektronische Steuerung des Bremssystems weder durch das Fußbremsmodul noch durch das erfindungsgemäße Modul möglich ist. Hier ist üblicherweise das Fußbremsmodul dazu ausgebildet, pneumatische Steuersignale zu erzeugen, die beispielsweise direkt an die Verarbeitungseinheiten, oder über das erfindungsgemäße Modul an die Verarbeitungseinheiten übermittelt werden können, wobei diese in der zuvor beschriebenen Weise daraus Bremsdrücke generieren.

Vorzugsweise erfolgt die Versorgung des EBS über die Versorgungsquelle und des erfindungsgemäßen Moduls über die weitere Versorgungsquelle elektrisch.

Vorzugsweise sind die Steuersignale insbesondere im Fehlerfall, nicht elektronisch, sondern vorzugsweise mechanisch, und/oder pneumatisch, und/oder hydraulisch ausgeprägt.

Dadurch wird vorteilhafterweise ermöglicht, Steuersignale, insbesondere an die Druckregelmodule, auf einer alternativen Basis zu erzeugen.

Vorzugsweise ist weiterhin mindestens eine Schnittstelle zum Empfang von Raddrehzahlsignalen vorgesehen, wobei das Modul dazu ausgebildet ist, die Raddrehzahlsignale bei der Bereitstellung der Steuersignale zu verarbeiten.

Das erfindungsgemäße Modul ist somit vorteilhafterweise in der Lage Steuersignale für das Bremssystem unter Berücksichtigung der Raddrehzahlsignale und somit insbesondere unter Berücksichtigung des Kraftschlussvermögens, vorzugsweise der Räder einzelner Achsen, besonders bevorzugt einzelner Räder, zur Verfügung zu stellen und somit vorzugsweise diese am Blockieren zu hindern.

Vorzugsweise ist das Modul dazu ausgebildet, mit Hilfe der Raddrehzahlsignale Steuersignale derart zur Verfügung zu stellen, um ein Blockieren von mindestens einem Rad des Fahrzeugs zu verhindern. Beispielsweise kann dies durch ein stotterndes Steuersignal erfolgen.

So kann auch durch das erfindungsgemäße Modul erreicht werden, ein damit ausgestattetes Fahrzeug im ersten Fehlerfall zu stabilisieren.

Vorzugsweise ist die mindestens eine Schnittstelle des Moduls, die zum Empfang einer Bremseingabe ausgebildet ist, dazu ausgebildet, die Bremseingabe durch das erste Modul, insbesondere das Fußbremsmodul, und/oder durch ein Fahrzeugnetzwerk vorzugsweise über einen CAN-BUS zu empfangen.

Vorteilhafterweise ist das Modul dadurch in der Lage, mit weiteren Vorrichtungen, insbesondere Steuergeräten des Fahrzeugs, zu kommunizieren und deren Steuerbefehle zu empfangen.

In einer weiteren vorteilhaften Ausführungsform der Erfindung ist ein Redundanzsystem zur Ergänzung eines elektronischen Bremssystems (EBS) für ein Fahrzeug vorgesehen. In einem derartigen Redundanzsystem ist ein erfindungsgemäßes Modul vorgesehen sowie mindestens eine Verarbeitungseinheit, die dazu ausgebildet ist, mindestens einen Bremsdruck nicht elektrisch, insbesondere nicht elektronisch gesteuert, aus einem Steuersignal zu erzeugen.

Weiterhin ist eine zweite Versorgungsquelle vorgesehen, die die Energieversorgung des Redundanzsystems unabhängig vom restlichen EBS gewährleistet.

Dabei ist das Redundanzsystem dazu ausgebildet, anstelle des elektronischen Bremssystems, vorzugsweise in einem Fehlerfall, besonders bevorzugt in dem oben beschriebenen ersten Fehlerfall, betrieben zu werden.

Das erfindungsgemäße Redundanzsystem stellt somit eine Rückfallebene eines EBS dar, und ermöglicht dadurch weiterhin die elektronisch gesteuerte Bremsung des Fahrzeugs.

Vorzugsweise ist die mindestens eine Verarbeitungseinheit dazu ausgebildet, den mindestens einen Bremsdruck mechanisch und/oder pneumatisch und/oder hydraulisch zu erzeugen.

So ist vorteilhafterweise gewährleistet, dass der Bremsdruck nicht in Abhängigkeit der ersten Versorgungsquelle erzeugt wird, die im ersten Fehlerfall keine Versorgung übernehmen könnte.

Vorzugsweise ist das Redundanzsystem dazu ausgebildet, eine Raddrehzahl mindestens eines Rades einer Achse durch Erfassungsmittel, insbesondere durch Raddrehzahlsensoren, zu ermitteln und diese bei der Erzeugung des Steuersignals zu berücksichtigen.

Weiterhin ist das Redundanzsystem vorzugsweise dazu ausgebildet, die ermittelten Raddrehzahlen an ein elektronisches Bremssystem oder andere Systeme und Komponenten im Fahrzeug, vorzugsweise elektronisch über einen vorhandenen CAN-BUS zu übermitteln.

So ist vorteilhafterweise auch das Redundanzsystem in der Lage, mindestens einen Teil der Raddrehzahlen des Fahrzeugs zu empfangen und bei der weiteren Erstellung von Steuersignalen zu berücksichtigen.

In einer weiteren vorteilhaften Ausführungsform der Erfindung ist ein elektronisch gesteuertes Bremssystem für ein Fahrzeug vorgesehen. Dieses weist ein elektronisches Bremssystem (EBS) mit einer Versorgungsquelle und mindestens einer Verarbeitungseinheit auf, die dazu ausgebildet ist, mindestens einen Bremsdruck elektronisch zu erzeugen. Weiterhin weist dieses Bremssystem ein Redundanzsystem auf, wobei das Bremssystem dazu ausgebildet ist, bei Ausfall der ersten Versorgungsquelle Bremsdrücke durch das Redundanzsystem, insbesondere elektronisch gesteuert, zu Verfügung zu stellen.

Somit wird vorteilhafterweise ein redundantes Bremssystem zur Verfügung gestellt, welches auch im Fehlerfall eine elektronisch gesteuerte Bremsung ermöglicht.

Vorzugsweise sind mindestens eine Verarbeitungseinheit des Redundanzsystems und mindestens eine Verarbeitungseinheit des elektronischen Bremssystems identisch.

Dies hat den Vorteil, dass Redundanzebenen beispielsweise innerhalb der Verarbeitungseinheiten geschaffen werden können, sodass das Redundanzsystem auf bereits bestehende Verarbeitungseinheiten zurückgreifen kann.

Vorzugsweise ist das elektronisch gesteuerte Bremssystem dazu ausgebildet, eine Raddrehzahl mindestens eines Rades einer Achse durch Erfassungsmittel, insbesondere Raddrehzahlsensoren, über das elektronische Bremssystem und eine Raddrehzahl mindestens eines Rades einer Achse durch Erfassungsmittel über das Redundanzsystem zu ermitteln.

Das Redundanzsystem erhält dabei vorzugsweise eine Raddrehzahl pro Achse. Besonders bevorzugt werden die Hälfte der ermittelten Raddrehzahlen durch das elektronische Bremssystem und die andere Hälfte der ermittelten Raddrehzahlen durch das Redundanzsystem ermittelt.

Vorteilhafterweise stehen somit, wenn beide Systeme fehlerfrei arbeiten, Raddrehzahlsignale aller Erfassungsmittel zur Verfügung, um beispielsweise Steuersignale für optimale Bremseingriffe an die einzelnen Druckregelmodule übermitteln zu können. So ist das System dazu ausgebildet, Funktionalitäten mittels der Auswertung von Raddrehzahlsignalen, beispielsweise ABS-Funktionalitäten, umzusetzen.

Dadurch, dass ein Teil der Raddrehzahlsignale durch das Redundanzsystem erfasst wird, kann auf die redundante Ausbildung der Raddrehzahlsensoren, insbesondere das Vorsehen eines zweiten Sensors an einem Rad, verzichtet werden. In einem Fehlerfall, also wenn das elektronische Bremssystem nicht mehr aktiv ist, stehen immer noch über das separat versorgte Redundanzsystem Raddrehzahlen, vorzugsweise mindestens eine pro Fahrzeugachse, zur Verfügung. So ist sichergestellt, dass auch in einem Fehlerfall Funktionalitäten mittels der Auswertung von Raddrehzahlsignalen, wenn auch eingeschränkt, beispielsweise als achsweise ABS-Funktionalität, umgesetzt werden können.

In einer weiteren vorteilhaften Ausführungsform der Erfindung ist ein Verfahren zum Betrieb eines erfindungsgemäßen elektronisch gesteuerten Bremssystems mit den Schritten Bereitstellen von Bremsdrücken zum Betrieb des Bremssystems durch ein elektronisches Bremssystem und Wechseln auf ein Redundanzsystem und Bereitstellen der Bremsdrücke durch das Redundanzsystem, falls ein Fehlerfall im elektronischen Bremssystem aufgetreten ist, vorgesehen.

Vorzugsweise ist der Fehlerfall der Ausfall der Versorgungsquelle.

In einer weiteren vorteilhaften Ausführungsform der Erfindung ist ein Fahrzeug, insbesondere ein Nutzfahrzeug, mit einem erfindungsgemäßen Modul oder mit einem erfindungsgemäßen Redundanzsystem oder mit einem erfindungsgemäßen elektronisch gesteuertem Bremssystem vorgesehen.

Im Folgenden erfolgt die Beschreibung der Erfindung anhand bevorzugter Ausführungsbeispiele unter Bezugnahme auf die beigefügten Zeichnungen.

Im Einzelnen zeigt:
Fig. 1 eine Ansicht eines elektronischen Bremssystems (EBS) nach dem Stand der Technik.
Fig. 2 eine vereinfachte Darstellung eines elektronischen Bremssystems (EBS) nach dem Stand der Technik.
Fig. 3 eine vereinfachte Darstellung eines erfindungsgemäßen Bremssystems.
Fig. 4 eine Ansicht eines erfindungsgemäßen Bremssystems.
Fig. 5 eine Ansicht einer zweiten Ausführungsform des erfindungsgemäßen Bremssystems.

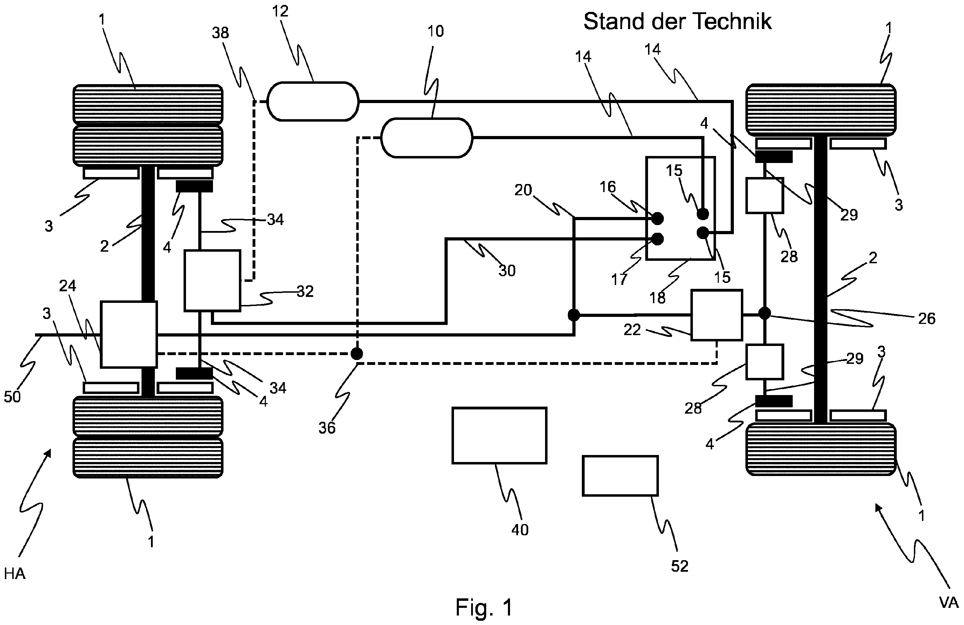

**Fig. 1** zeigt eine Ansicht eines elektronischen Bremssystems (EBS) nach dem Stand der Technik. Es ist eine Vorderachse VA und eine Hinterachse HA gezeigt, welche jeweils über Räder 1 verfügt, die an einer Achse 2 drehbar befestigt sind. Den Rädern 1 ist jeweils eine Bremseinrichtung zugeordnet, die in dem gezeigten Beispiel als Reibungsbremse ausgeführt ist. Dazu ist an jedem Rad 1 eine Bremsscheibe 3 vorgesehen, welche dazu ausgebildet ist, mit einem Reibpartner, in diesem Fall einem Bremsbelag 4, reibend in Kontakt zu treten. Die Bremsscheibe 3 ist drehfest mit dem jeweiligen Rad 1 verbunden und dreht sich somit während der Fahrt mit dem Rad 1 mit.

Zur Ausführung einer Bremsung wird der jeweilige Bremsbelag 4 mit der entsprechenden Bremsscheibe 3 durch einen eingebrachten Bremsdruck in Kontakt gebracht, wodurch sich eine Reibkraft an der Bremsscheibe 3 einstellt, die ein bremsendes Moment zur Folge hat, welches der Drehbewegung der Bremsscheibe 3 und insbesondere des Rades 1 entgegenwirkt.

Auf die Darstellung weiterer Komponenten des Fahrzeugs und insbesondere des Achsaufbaus bzw. des Aufbaus der Bremse, wurde in dieser Darstellung aus Gründen der Übersichtlichkeit verzichtet.

Weiterhin ist ein derartiger Bremsaufbau nicht beschränkend für den Gegenstand der Erfindung anzusehen. Er dient lediglich als Beispiel, um die Wirkungsweise des erfindungsgemäßen Gegenstands zu verdeutlichen. Vielmehr sind auch alternative Aufbaumöglichkeiten einer Bremse denkbar, wie beispielsweise einer Trommelbremse anstelle der gezeigten Scheibenbremse.

Weiterhin sind mehrere Komponenten eines elektronischen Bremssystems gezeigt, wie es bei Fahrzeugen, insbesondere Nutzfahrzeugen, zur Durchführung der Abbremsung des Fahrzeugs eingesetzt wird.

Nachfolgend erfolgt die Beschreibung der Funktionsweise des EBS im Normalfall.

Es sind ein erster Druckspeicher 10 und ein zweiter Druckspeicher 12 gezeigt, die zur Speicherung von Druckluft vorgesehen sind. Diese stehen über Versorgungsleitungen 36, 38 mit Druckregelmodulen 22, 24, 32 in Verbindung und versorgen diese mit Druckluft. Bei den Druckregelmodulen 22, 24, 32 handelt es sich beispielsweise um einen einkanaligen elektropneumatischen Modulator 22, einen zweikanaligen elektropneumatischen Modulator 32 und ein Trailermodul 24 für einen möglichen Anhängerbetrieb. Weiterhin sind an der Vorderachse VA Drucksteuerventile 28 vorgesehen, welche über eine Leitung 26 mit dem Druckregelmodul 22 in Verbindung stehen. Bremsdrücke werden durch das Druckregelmodul 22 über die Leitung 26 für die Vorderachse VA und anschließend radindividuell durch die Drucksteuerventile 28 über die Leitungen 29 sowie durch das Druckregelmodul 32 radindividuell über die Leitungen 34 für die Hinterachse HA generiert. Das Trailermodul 24 generiert für einen möglicherweise vorhandenen Anhänger Bremsdrücke und übermittelt diese über die Leitung 50. Weiterhin ist ein Fußbremsmodul 18 vorgesehen, welches beispielsweise über eine Schnittstelle (nicht dargestellt) zu einem Fahrer verfügt, um dessen Eingaben zu empfangen.

Weiterhin ist eine Steuervorrichtung 40, beispielweise ein elektronisches Steuergerät, vorgesehen, welches mit den Elementen des EBS elektronisch in Verbindung steht. Auf die Darstellung der elektronischen Verbindungen wurde aus Gründen der Übersichtlichkeit in allen Zeichnungen verzichtet.

Das gezeigte EBS verfügt über eine Versorgungsquelle 52, welche die Energieversorgung, beispielsweise als Batteriekreis, des gesamten elektronisch gesteuerten Teils des EBS übernimmt.

Im Normalfall werden Fahrereingaben durch das Fußbremsmodul 18 empfangen und elektronisch durch die Steuervorrichtung 40 verarbeitet. Die Steuervorrichtung 40 ermittelt daraus Bremsdrücke für die einzelnen Achsen VA, HA sowie optional für einen angekuppelten Anhänger. Diese Bremsdrücke werden elektronisch an die Druckregelmodule 22, 24, 32 übermittelt, woraus diese Bremsdrücke, wie oben beschrieben generieren, wobei über die Versorgungsleitungen 36, 38 zu diesem Zweck Druckluft in die Druckregelmodule 22, 24, 32 eingespeist wird.

Im Weiteren soll hier auf die pneumatische Rückfallebene des EBS eingegangen werden.

Fällt beispielsweise die elektrische Versorgung aus der Versorgungsquelle 52 aus, so ist eine elektronische Steuerung des EBS, wie oben beschrieben, nicht mehr möglich. Daher weist ein EBS nach dem Stand der Technik üblicherweise eine pneumatische Rückfallebene auf.

Die Druckspeicher 10, 12 stehen über Versorgungsleitungen 14 mit Eingängen 15 des Fußbremsmoduls 18 in Verbindung. Das Fußbremsmodul 18 ist dazu ausgebildet, neben elektronischen Steuersignalen im Normalfall, aus Fahrereingaben pneumatische Steuersignale zu generieren. Diese werden über einen Ausgang 16 bzw. einen Ausgang 17 bereitgestellt, wobei dazu Druckluft aus den Druckspeichern 10, 12 genutzt wird. Diese pneumatischen Steuersignale dienen der Ansteuerung der Druckregelmodule 22, 24, 32 des EBS, zur Betätigung der Fahrzeugbremsen.

Die Druckregelmodule 22, 24, 32 und ferner die Drucksteuerventile 28 weisen zu diesem Zweck eine pneumatische Rückfallebene auf, die dazu ausgebildet ist, aus den pneumatischen Steuersignalen Bremsdrücke zu generieren. Dabei wechseln die Drucksteuerventile 28, welche nun nicht mehr aktiv bestromt bzw. angesteuert werden können, in eine Durchlassstellung. D.h. sie leiten den Bremsdruck aus Leitung 26 unverändert an die Leitungen 29 weiter. Die Druckregelmodule 22, 24, 32 sind ferner dazu ausgebildet, aus einem pneumatischen Steuersignal einen Bremsdruck zu generieren, mit dem sie anschließend die Leitungen 29, 34, 50 beaufschlagen.

Das gezeigte EBS ist typischerweise zweikreisig ausgebildet. Ein erster Kreis ist als Vorderachskreis gezeigt. Dieser wird über den Ausgang 16 des Fußbremsmoduls 18 mit Steuersignalen versorgt, welche über eine sich verzweigende Steuerleitung 20 an das Druckregelmodul 22 sowie an das Trailermodul 24 übermittelt werden.

Zusammenfassend wird der erste Kreis also gebildet aus dem ersten Druckspeicher 10 einer Versorgungsleitung 14, dem Fußbremsmodul 18, der Steuerleitung 20, dem Druckregelmodul 22, dem Trailermodul 24, der Leitung 26, den Drucksteuerventilen 28, den Leitungen 29 sowie der Versorgungsleitung 36.

Ein zweiter Kreis ist als Hinterachskreis gezeigt. Der Ausgang 17 des Fußbremsmoduls 18 ist über eine Steuerleitung 30 mit dem Druckregelmodul 32 verbunden. Dieses Druckregelmodul 32 ist zweikanalig ausgebildet. Das Fußbremsmodul 18 übermittelt über den Ausgang 17 sowie die Steuerleitung 30 Steuersignale an das Druckregelmodul 32.

Der zweite Kreis wird somit zusammenfassend gebildet aus dem zweiten Druckspeicher 12, einer Versorgungsleitung 14, einem Eingang 15 des Fußbremsmoduls 18, dem Fußbremsmodul 18, einem Ausgang 17 der Steuerleitung 30, dem Druckregelmodul 32, den Leitungen 34 sowie der Versorgungsleitung 38.

Die gezeigten Kreise stellen die pneumatische Rückfallebene des ansonsten elektronisch gesteuerten Bremssystems dar.

Die durch das Fußbremsmodul 18 zur Verfügung gestellten Steuersignale, welche an Druckregelmodule 22, 32 sowie an das Trailermodul 24 übermittelt werden, sind in der Rückfallebene nicht elektronisch, sondern beispielsweise pneumatisch ausgebildet.

Die dargestellte Konfiguration ermöglicht in einem Fehlerfall an der Vorderachse VA eine achsweise Regelung des Bremsdruckes. Da die Drucksteuerventile 28 in Durchlassstellung sind wird ein Bremsdruck des Druckregelmoduls 22 direkt über die Leitungen 26, 29 an beide Bremsen der Vorderachse VA geleitet.

Sollte das Druckregelmodul 32 an der Hinterachse HA in der Rückfallebene nicht dazu ausgebildet sein, den Bremsdruck radindividuell einzustellen, so ist auch hier nur eine achsweise Regelung des Bremsdruckes auf Basis des pneumatischen Steuersignals aus der Steuerleitung 30 möglich.

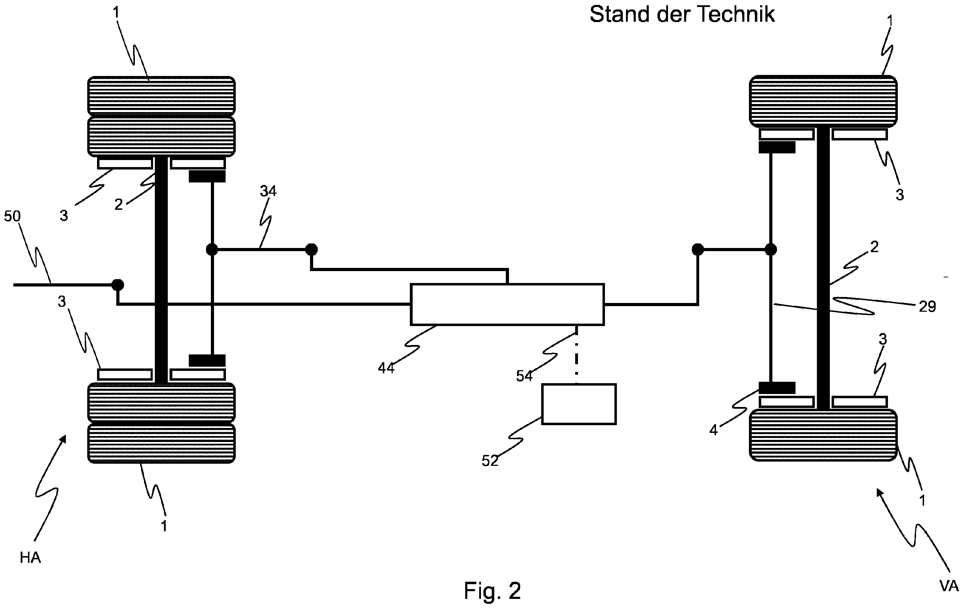

In **Fig. 2** ist das gezeigte System aus Fig. 1 als elektronisches Bremssystem (EBS) 44 zusammengefasst. Lediglich die erste Versorgungsquelle 52 wurde hier separat dargestellt. Zusätzlich ist exemplarisch ein Versorgungskabel 54 gezeigt, welches das EBS 44 mit elektrischem Strom bzw. Energie versorgt. Das EBS steht dabei mit den Leitungen 29, 34, 50 in Verbindung, worüber entsprechend der Darstellung aus Fig. 1 Bremsdrücke an die einzelnen Bremsen bzw. einen möglichen Anhänger übermittelt werden. Der einfacheren Darstellung halber wurden hier jeweils sich verzweigende Leitungen 29, 34 für Vorder- und Hinterachse VA, HA gezeigt. Es können jedoch auch Ausführungen mit einer zweiten Leitung 29, 34 ausgebildet werden, worüber eine radindividuelle Bremsung ermöglicht wird.

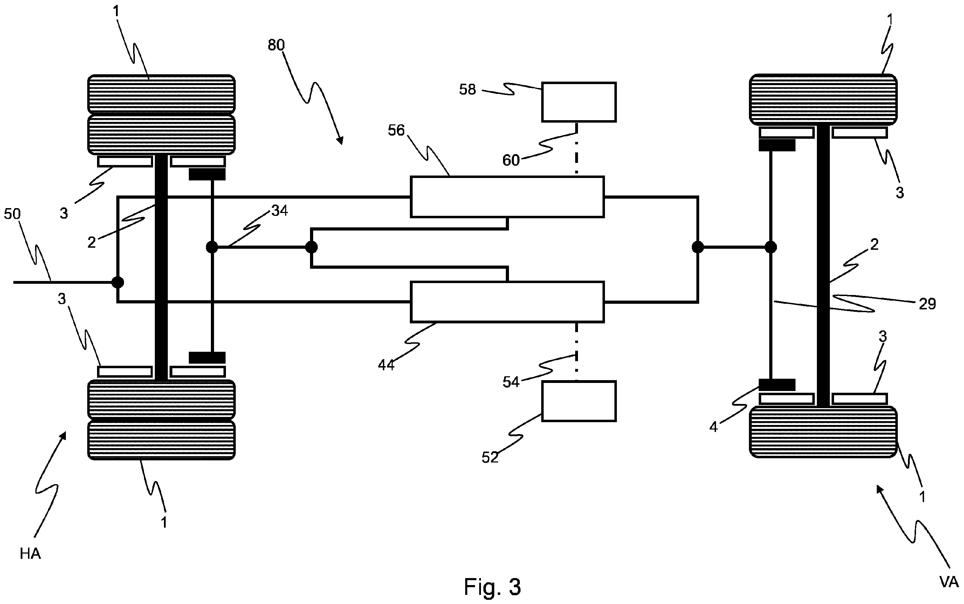

In **Fig. 3** ist nun die erfindungsgemäße Erweiterung des EBS 44 gezeigt. Erfindungsgemäß ist ein Bremssystem 80 vorgesehen, das aus dem, dem Stand der Technik entsprechenden, EBS 44 mit dessen Versorgungsquelle 52 gebildet wird, das ergänzt ist durch ein elektronisch gesteuertes Redundanzsystem 56, welches dazu ausgebildet ist, ebenso Bremsdrücke für die Leitungen 29, 34, 50 zu generieren. Das Redundanzsystem 56 ist nicht mit der ersten Versorgungsquelle 52 verbunden, sondern verfügt über ein eigenes Versorgungskabel 60, über das es mit einer zweiten Versorgungsquelle 58, beispielsweise einem zweiten Batteriekreis, in Verbindung steht.

Durch die separate Energieversorgung 52, 58 beider Systeme 44, 56 verfügt das Bremssystem 80 über eine redundante Ausbildung.

Sollte die erste Versorgungsquelle 52 ausfallen, so ist weiterhin eine elektronisch gesteuerte Bremsung des Fahrzeugs bzw. eine Bereitstellung von benötigten Bremsdrücken an die Leitungen 29, 34, 50 über das Redundanzsystem 56 möglich, da dieses durch die zweite Versorgungsquelle 58 unabhängig von der ersten Versorgungsquelle 52 betrieben werden kann.

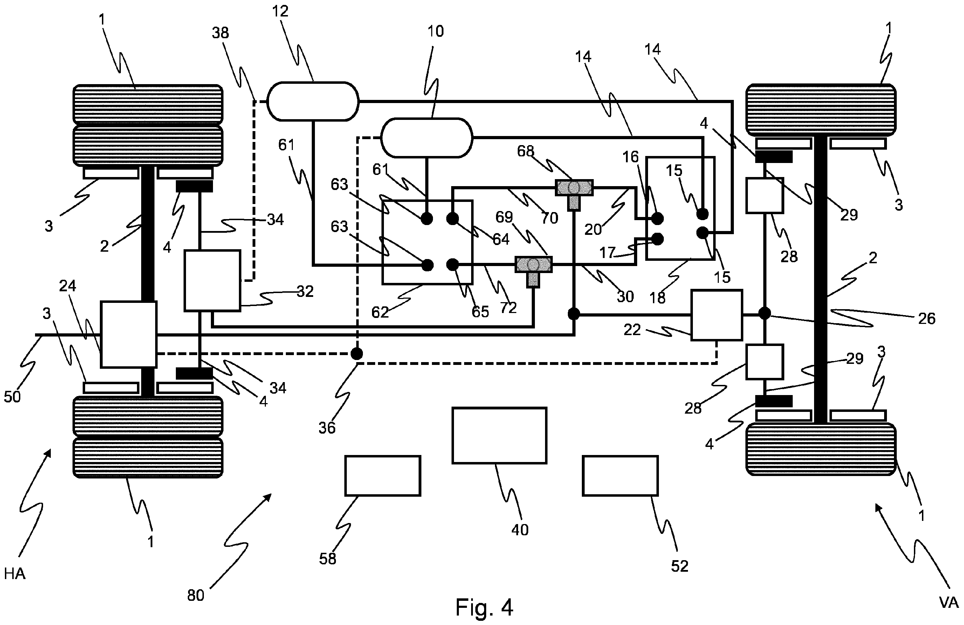

**Fig. 4** greift nun die Darstellung des elektronischen Bremssystems nach dem Stand der Technik aus Fig. 1 auf und zeigt in einem Ausführungsbeispiel die Erweiterung dieses Systems, um ein Bremssystem 80 auszubilden, das nach dem Prinzip aus Fig. 3 aufgebaut ist. Auf die Erläuterung der bekannten Elemente und deren Wirkweisen wird an dieser Stelle verzichtet und es wird auf die Beschreibung zu Fig. 1 verwiesen.

Es ist ein Redundanzmodul 62 gezeigt, welches über Versorgungsleitungen 61 und entsprechende Eingänge 63 mit dem ersten Druckspeicher 10 und dem zweiten Druckspeicher 12 verbunden ist.

Das Redundanzmodul 62 verfügt, ähnlich wie das Fußbremsmodul 18, über einen Ausgang 64, welcher als Schnittstelle zur Vorderachse VA dient, über welchen also pneumatische Steuersignale an die Vorderachse VA bzw. das Trailermodul 24 übermittelt werden können. Zu diesem Zweck steht der Ausgang 64 über eine Steuerleitung 70 mit einem Wechselventil 68 in Verbindung. Das Wechselventil 68 ist dabei in die Steuerleitung 20 integriert und zwar vor der Verzweigung zu dem Druckregelmodul 22 der Vorderachse VA und dem Trailermodul 24. Das Wechselventil 68 ist dazu ausgebildet, Steuersignale entweder aus dem Fußbremsmodul 18, oder aus dem Redundanzmodul 62 weiterzuleiten.

Weiterhin verfügt das Redundanzmodul 62 über einen weiteren Ausgang 65, welcher pneumatische Steuersignale für die Hinterachse HA zur Verfügung stellt. Zu diesem Zweck ist ein zweites Wechselventil 69 in der Leitung 30 vorgesehen und der Ausgang 65 des Redundanzmoduls 62 steht mit diesem Wechselventil 69 über eine Steuerleitung 72 in Verbindung.

Das Wechselventil 69 ist dazu ausgebildet, entweder Steuersignale des Ausgangs 17 des Fußbremsmoduls 18 oder Steuersignale des Ausgangs 65 des Redundanzmoduls 62 an das Druckregelmodul 32 der Hinterachse HA zu übermitteln.

Das Redundanzmodul 62 ist somit mit der Rückfallebene (wie oben beschrieben), also den beiden Kreisen des bestehenden Bremssystems 44 in Kontakt.

Weiterhin ist in dieser Darstellung unten die zweite Versorgungsquelle 58 gezeigt. Die erste Versorgungsquelle 52 versorgt die Bestandteile des Systems entsprechend der Beschreibung aus Fig. 1. Die zweite Versorgungsquelle 58 übernimmt die elektrische Versorgung des Redundanzmoduls 62.

Die bisher beschriebenen Elemente des gezeigten Bremssystems 80 werden im Normalbetrieb durch die erste Versorgungsquelle 52 elektrisch versorgt und durch die Steuervorrichtung 40 elektronisch gesteuert. In einem ersten Fehlerfall, also beispielsweise, wenn die erste Versorgungsquelle 52 ausfällt, ist eine Versorgung der entsprechenden Module und eine elektronische Steuerung derselben nicht mehr möglich. Zu diesem Zweck sind sämtliche Module, insbesondere das Druckregelmodul 22, das Trailermodul 24, das Druckregelmodul 32 sowie die Drucksteuerventile 28 mit einer zu Fig. 1 beschriebenen Redundanzebene ausgebildet. In dieser Redundanzebene erfolgt die Erzeugung des Bremsdrucks nicht mehr elektrisch sondern rein pneumatisch.

In dem beschriebenen Fehlerfall reduziert sich die elektronische Steuerung rein auf das Redundanzmodul 62, welches über die Ausgänge 64, 65 pneumatische Steuersignale zur Verfügung stellt.

Die Wechselventile 68, 69 sind beispielsweise als durch die weitere Versorgungsquelle 58 aktiv bestromte Ventile ausgebildet und leiten in diesem Zustand nur Steuersignale des Redundanzmoduls 62 weiter.

Werden diese nicht mehr durch die weitere Versorgungsquelle 58 versorgt, was einem zweiten Fehlerfall entspricht, schließen sie die Eingänge, die mit dem Redundanzmodul 62 verbunden sind und öffnen stattdessen die Eingänge, die mit dem Fußbremsmodul 18 verbunden sind und leiten die pneumatischen Steuersignale des Fußbremsmoduls 18 in einer zweiten Rückfallebene, die rein pneumatisch ausgeprägt ist, an die entsprechenden Elemente des Bremssystems weiter, welche diese wie zuvor beschrieben pneumatisch weiterverarbeiten.

Somit besteht die Möglichkeit, die Funktionalität des EBS 44 über ein redundantes zweites Bremssystem 56 aufrechtzuerhalten, welches ebenfalls elektronisch angesteuert wird.

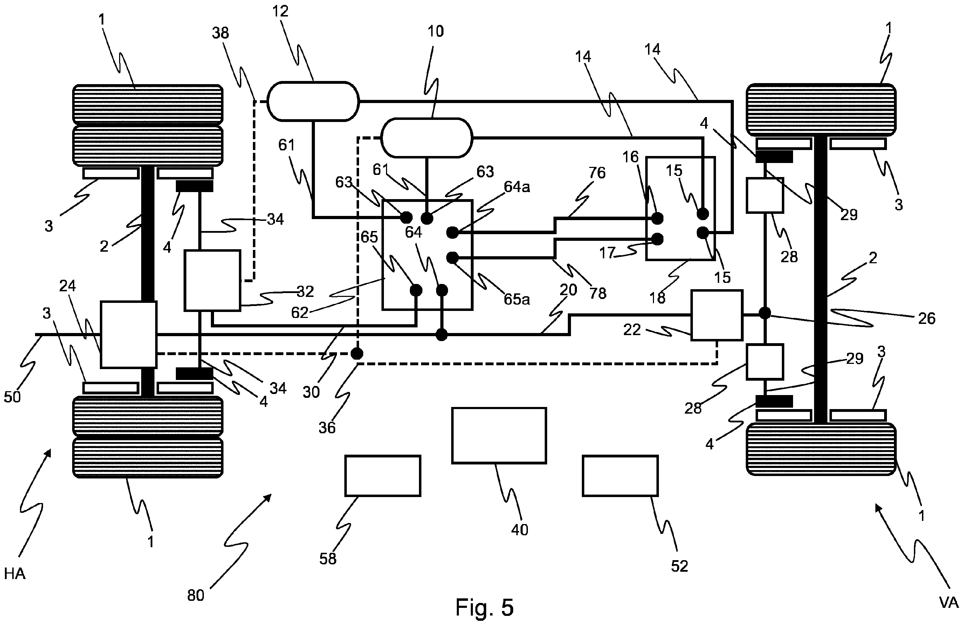

In **Fig. 5** ist eine weitere Ausführungsform des erfindungsgemäßen Bremssystems 80 gezeigt. Die Elemente entsprechen weitgehend der Darstellung aus Fig. 4. Das Redundanzmodul 62 verfügt nun über zwei weitere Anschlüsse 64a, 65a, die über Steuerleitungen 76, 78 mit den Ausgängen 16, 17 des Fußbremsmoduls 18 verbunden sind. Die Ausgänge 64, 65 des Redundanzmoduls 62 stehen nun direkt mit den Steuerleitungen 20, 30 in Verbindung.

Die Wechselventile 68, 69 aus Fig. 4 sind in dieser Ausführungsform des Moduls 62 in selbiges integriert. Das bedeutet, in einem zweiten Fehlerfall, also wenn beide Versorgungsquellen 52, 58 ausgefallen sind und eine elektronische Steuerung des gesamten Bremssystem 80 nicht mehr möglich ist, werden die pneumatischen Steuersignale des Fußbremsmoduls 18 direkt in das Redundanzmodul 62 übermittelt. Innerhalb des Redundanzmoduls 62 werden diese weitergeleitet an die Ausgänge 64, 65. Das Redundanzmodul 62 wirkt in diesem Fall lediglich als Bestandteil der Steuerleitungen 20, 30 und geht somit in Durchlassstellung.

In dem ersten Fehlerfall, also, wenn die erste Versorgungsquelle 52 das Bremssystem 44 nicht mehr versorgt, generiert das Redundanzmodul 62 eigenständig Steuersignale und schickt diese an die entsprechenden Ausgänge 64 und 65. Das Redundanzmodul 62 ist dabei dazu ausgebildet, den ersten Fehlerfall zu erkennen und entsprechende pneumatische Steuersignale, die aus dem Fußbremsmodul 18 kommen, durch die integrierten Wechselventile zu blockieren.

Die weitere Funktionsweise der Ausführungsform aus Fig. 5 entspricht der aus Fig. 4.

Das erfindungsgemäße Redundanzmodul 62 aus Fig. 4 und Fig. 5 ist somit mit dem ersten und zweiten Kreis in Kontakt. Innerhalb des Redundanzmoduls 62 sind die pneumatischen Kreise getrennt integriert, so dass auch die entsprechenden Forderungen der ECE R13 erfüllt werden.

Die gezeigten Ausführungsformen des Redundanzmoduls 62 lassen sich dank ihrer Gestaltung in bereits bestehende Rückfallebenen, also die beschriebenen Kreise integrieren.

Weiterhin besteht die Möglichkeit, Drehzahlsensoren, welche beispielsweise bereits im Fahrzeug vorhanden sind und welche die Drehzahlen der einzelnen Räder messen, mit dem Redundanzmodul 62 zu verbinden. Das elektronisch gesteuerte Redundanzmodul 62 kann mithilfe der Informationen der Drehzahlsensoren achsweise einen Bremsdruck zur Verfügung stellen, der so ausgebildet ist, dass ein Blockieren der Räder 1 durch zu starkes Abbremsen verhindert wird. Es lässt sich so eine Antiblockierfunktion zumindest achsweise realisieren.

Weiterhin ist ein dritter Fehlerfall möglich welcher in dem Ausfall der zweiten Versorgungsquelle 58 besteht, wobei die erste Versorgungsquelle 52 nach wie vor aktiv ist. Ist dies der Fall, so ist grundsätzlich eine elektronische Regelung des EBS möglich, wobei möglicherweise Daten, insbesondere Raddrehzahlen, welche über das Redundanzsystem 56 ermittelt wurden, nun nicht mehr zur Verfügung stehen. In diesem Fall kann das EBS 44 noch mit den verbleibenden Werten den Betrieb fortsetzen und beispielsweise eine achsweise ABS-Regelung bzw. eine achsweise Regelung des Bremsdruckes vornehmen.

Die beschriebenen Ausführungsformen zeigen elektronisch gesteuerte Bremssysteme, bzw. Module, die in einer Rückfallebene pneumatische Steuer- und Bremsdrücke zur Verfügung stellen.

Weitere Ausführungsformen sind denkbar, in denen Steuersignale und/oder Bremsdrücke hydraulisch ausgeprägt sind. In einer weiteren Ausführungsform sind auch mechanisch ausgeprägte Bremsbetätigungen und/oder Steuersignale vorgesehen. Weitere Ausführungsformen lassen sich durch Kombination der oben beschriebenen Ausführungsformen bilden.

Weiterhin sind auch weitere Strukturen eines EBS denkbar. So kann beispielsweise der Aufbau der pneumatischen Regeleinrichtungen der Vorderachse VA auch an der Hinterachse HA vorgesehen sein, so dass hier nun ebenfalls ein einkanaliges Druckregelmodul 22 in Kombination mit Drucksteuerventilen 28 anstelle des zweikanaligen Druckregelmoduls 32 vorgesehen ist.

Ebenso kann ein weiteres zweikanaliges Druckregelmodul 32 an der Vorderachse VA anstelle des einkanaligen Druckregelmoduls 22 in Kombination mit den Drucksteuerventilen 28 vorgesehen sein.

Auch ist eine Aufteilung der Versorgung beider Kreise durch zwei separate Druckspeicher 10, 12 nicht zwingend nötig. Es kann auch die Versorgung durch einen oder auch mehr als zwei Druckspeicher vorgesehen sein.

Ferner ist eine Integration des Redundanzmoduls 62 in das Fußbremsmodul 18 bzw. ein Zusammenfassen beider Module zu einem denkbar.

### BEZUGSZEICHENLISTE

- 1: Rad
- 2: Achse
- 3: Bremsscheibe
- 4: Bremsbelag
- 10: erster Druckspeicher (Druckluftquelle)
- 12: zweiter Druckspeicher (Druckluftquelle)
- 14: Versorgungsleitung
- 15: Eingang Fußbremsmodul (Schnittstelle)
- 16: Ausgang Fußbremsmodul (Schnittstelle VA)
- 17: Ausgang Fußbremsmodul (Schnittstelle HA)
- 18: Fußbremsmodul (erstes Modul)
- 20: Steuerleitung
- 22: Druckregelmodul (Verarbeitungseinheit, einkanalig)
- 24: Trailermodul (Verarbeitungseinheit)
- 26: Leitung
- 28: Drucksteuerventil
- 29: Leitung
- 30: Steuerleitung
- 32: Druckregelmodul (Verarbeitungseinheit, zweikanalig)
- 34: Leitung
- 36: Versorgungsleitung
- 38: Versorgungsleitung
- 40: EBS-Steuergerät (Steuervorrichtung)
- 44: elektronisches Bremssystem (EBS, Primärsystem)
- 50: Leitung
- 52: Versorgungsquelle EBS (Energieversorgung, erste Versorgungsquelle)
- 54: Versorgungskabel
- 56: Redundanzsystem
- 58: Versorgungsquelle Redundanzsystem (Energieversorgung, zweite Versorgungsquelle)
- 60: Versorgungskabel
- 61: Versorgungsleitung
- 62: Redundanzmodul (Modul)
- 63: Eingang/Schnittstelle
- 64: Ausgang/Schnittstelle
- 64a: Schnittstelle/Anschluss
- 65: Ausgang/Schnittstelle
- 65a: Schnittstelle/Anschluss
- 68: Wechselventil
- 69: Wechselventil
- 70: Steuerleitung
- 72: Steuerleitung
- 76: Steuerleitung
- 78: Steuerleitung
- 80: Bremssystem
- HA: Hinterachse
- VA: Vorderachse

## Patentansprüche

1. Modul (62) zur Bereitstellung von Steuersignalen für ein Bremssystem (80) eines Fahrzeugs, das eine Versorgungsquelle (52) aufweist, aufweisend:
- mindestens eine Schnittstelle (63), die dazu ausgebildet ist, mit einer Druckluftquelle (10, 12) verbunden zu werden,
- mindestens eine Schnittstelle (64, 65), die dazu ausgebildet ist, die Steuersignale an mindestens eine Verarbeitungseinheit (22, 24, 32) zur Erzeugung von Bremsdrücken zu übermitteln, wobei
das Modul (62) dazu ausgebildet ist, über eine weitere Versorgungsquelle (58) versorgt zu werden, wobei das Modul (62) weiterhin aufweist:
- mindestens eine Schnittstelle (64a, 65a), die dazu ausgebildet ist, Steuersignale eines ersten Moduls (18) zu empfangen, und/oder
- mindestens eine Schnittstelle, die dazu ausgebildet ist, Eingaben eines Fahrers zu empfangen,
- mindestens eine Schnittstelle, die dazu ausgebildet ist, die Steuersignale des ersten Moduls (18) an die mindestens eine Verarbeitungseinheit (22, 24, 32) zu übermitteln, **dadurch gekennzeichnet, dass**
das Modul (62) dazu ausgebildet ist, in einem ersten Fehlerfall Steuersignale des ersten Moduls (18) zu blockieren und eigene Steuersignale an mindestens eine Verarbeitungseinheit (22, 24, 32) zu übermitteln, und in einem zweiten Fehlerfall eigene Steuersignale zu blockieren und die Steuersignale des ersten Moduls (18) an mindestens eine Verarbeitungseinheit (22, 24, 32) zu übermitteln.

2. Modul (62) nach Anspruch 1, weiterhin aufweisend:
- Verarbeitungsmittel, welche ebenfalls über die weitere Versorgungsquelle (58) versorgt werden und die dazu ausgebildet sind, die Steuerung des Moduls (62) durchzuführen, und/oder
- mindestens eine Schnittstelle, die zum Empfang einer Bremseingabe ausgebildet ist.

3. Modul (62) nach Anspruch 2, wobei
die Verarbeitungsmittel einstückig mit dem Modul (62) ausgebildet sind.

4. Modul (62) nach einem der vorangegangenen Ansprüche, wobei
die mindestens eine Schnittstelle, die dazu ausgebildet ist, die Steuersignale des ersten Moduls (18) an die mindestens eine Verarbeitungseinheit (22, 24, 32) zu übermitteln, mit der mindestens einen Schnittstelle (64, 65), die dazu ausgebildet ist, die Steuersignale an mindestens eine Verarbeitungseinheit (22, 24, 32) zu übermitteln, identisch ist.

5. Modul (62) nach einem der vorangegangenen Ansprüche, wobei
der erste Fehlerfall durch einen Zusammenbruch der Versorgung des Bremssystems (80) durch die Versorgungsquelle (52) oder durch einen Ausfall eines Primärsystems (44) charakterisiert ist, und
der zweite Fehlerfall durch einen Zusammenbruch der Versorgung des Bremssystems (80) durch die weitere Versorgungsquelle (58) oder durch einen Ausfall eines Redundanzsystems (56) charakterisiert ist

6. Modul (62) nach einem der vorangegangenen Ansprüche, wobei
die Versorgung über die Versorgungsquelle (52) und über die weitere Versorgungsquelle (58) elektrisch erfolgt.

7. Modul (62) nach einem der vorangegangenen Ansprüche, wobei
die Steuersignale nicht elektronisch, insbesondere mechanisch, und/oder pneumatisch, und/oder hydraulisch ausgeprägt sind.

8. Modul (62) nach einem der vorangegangenen Ansprüche, weiterhin aufweisend:
- mindestens eine Schnittstelle zum Empfang von Raddrehzahlsignalen, wobei
das Modul (62) dazu ausgebildet ist, die Raddrehzahlsignale bei der Bereitstellung der Steuersignale mit zu verarbeiten.

9. Modul (62) nach Anspruch 8, wobei
das Modul (62) dazu ausgebildet ist, mit Hilfe der Raddrehzahlsignale Steuersignale derart zur Verfügung zu stellen, um ein Blockieren von mindestens einem Rad (1) in Folge einer Bremsung durch einen erzeugten Bremsdruck des Fahrzeugs zu verhindern.

10. Modul (62) nach einem der vorangegangenen Ansprüche, wobei
die mindestens eine Schnittstelle, die zum Empfang einer Bremseingabe ausgebildet ist, dazu ausgebildet ist, die Bremseingabe durch das erste Modul (18) und/oder durch ein Fahrzeugnetzwerk zu empfangen.

11. Redundanzsystem (56) zur Ergänzung eines elektronischen Bremssystems (44) für ein Fahrzeug, aufweisend:
- ein Modul (62) nach einem der Ansprüche 1 bis 10,
- mindestens eine Verarbeitungseinheit (22, 24, 32), die dazu ausgebildet ist, mindestens einen Bremsdruck nicht elektronisch gesteuert aus einem Steuersignal zu erzeugen,
- eine zweite Versorgungsquelle (58), wobei
das Redundanzsystem (56) dazu ausgebildet ist, anstelle des elektronischen Bremssystems (44) betrieben zu werden.

12. Redundanzsystem (56) nach Anspruch 11, wobei
die mindestens eine Verarbeitungseinheit (22, 24, 32) dazu ausgebildet ist, den mindestens einen Bremsdruck mechanisch und/oder pneumatisch und/oder hydraulisch zu erzeugen, und/oder
das Redundanzsystem (56) dazu ausgebildet ist, eine Raddrehzahl mindestens eines Rades einer Achse durch Erfassungsmittel zu ermitteln und diese bei der Bereitstellung des Steuersignals zu berücksichtigen.

13. Elektronisch gesteuertes Bremssystem (80) für ein Fahrzeug, aufweisend:
- ein elektronisches Bremssystem (44) mit einer Versorgungsquelle (52) und mindestens einer Verarbeitungseinheit (22, 24, 32), die dazu ausgebildet ist, mindestens einen Bremsdruck elektronisch zu erzeugen,
- ein Redundanzsystem (56) nach einem der Ansprüche 11 oder 12, wobei
das Bremssystem (80) dazu ausgebildet ist, bei Ausfall der ersten Versorgungsquelle (52) oder bei Ausfall des elektronischen Bremssystems (44) Bremsdrücke durch das Redundanzsystem (56) zu Verfügung zu stellen.

14. Elektronisch gesteuertes Bremssystem (80) für ein Fahrzeug nach Anspruch 13, wobei
mindestens eine Verarbeitungseinheit (22, 24, 32) des Redundanzsystems (56) und mindestens eine Verarbeitungseinheit (22, 24, 32) des elektronischen Bremssystems (44) identisch ist, und/oder
das elektronisch gesteuerte Bremssystem (80) dazu ausgebildet ist, eine Raddrehzahl mindestens eines Rades einer Achse durch Erfassungsmittel über das elektronische Bremssystem (44) und eine Raddrehzahl mindestens eines Rades einer Achse durch Erfassungsmittel über das Redundanzsystem (56) zu ermitteln.

15. Verfahren zum Betrieb eines elektronisch gesteuerten Bremssystems (80) nach den Ansprüchen 13 oder 14, aufweisend folgende Schritte:
- Bereitstellen von Bremsdrücken zum Betrieb des Bremssystems (80) durch ein elektronisch gesteuertes Bremssystem (44),
- Wechseln auf ein Redundanzsystem (56) und Bereitstellen der Bremsdrücke durch das Redundanzsystem (56), falls ein Fehlerfall im elektronischen Bremssystem (44) aufgetreten ist.

16. Verfahren nach Anspruch 15, wobei
der Fehlerfall der Ausfall des elektronischen Bremssystems (44) oder dessen Versorgungsquelle (52) ist.

## Claims

1. Module (62) for providing control signals for a brake system (80) of a vehicle which has a supply source (52), having:
- at least one interface (63) which is designed to be connected to a compressed-air source (10, 12),
- at least one interface (64, 65) which is designed to transmit the control signals to at least one processing unit (22, 24, 32) for the purposes of generating brake pressures,
wherein
the module (62) is designed to be provided with a supply by means of a further supply source (58), the module (62) furthermore having:
- at least one interface (64a, 65a) which is designed to receive control signals of a first module (18), and/or
- at least one interface which is designed to receive inputs from a driver,
- at least one interface which is designed to transmit the control signals of the first module (18) to the at least one processing unit (22, 24, 32), **characterized in that**
the module (62) is designed to, in a first fault situation, block control signals of the first module (18) and transmit its own control signals to at least one processing unit (22, 24, 32) and, in a second fault situation, block its own control signals and transmit the control signals of the first module (18) to at least one processing unit (22, 24, 32).

2. Module (62) according to Claim 1, furthermore having:
- processing means which are likewise provided with a supply by means of the further supply source (58) and which are designed to perform the control of the module (62), and/or
- at least one interface which is designed for receiving a brake input.

3. Module (62) according to Claim 2, wherein
the processing means are formed integrally with the module (62).

4. Module (62) according to any of the preceding claims, wherein
the at least one interface which is designed to transmit the control signals of the first module (18) to the at least one processing unit (22, 24, 32) is identical to the at least one interface (64, 65) which is designed to transmit the control signals to at least one processing unit (22, 24, 32).

5. Module (62) according to any of the preceding claims, wherein
the first fault situation is **characterized by** a breakdown of the supply to the brake system (80) by the supply source (52), or by a failure of a primary system (44), and
the second fault situation is **characterized by** a breakdown of the supply to the brake system (80) by the further supply source (58), or by a failure of a redundancy system (56).

6. Module (62) according to any of the preceding claims, wherein
the supply by means of the supply source (52) and by means of the further supply source (58) is realized electrically.

7. Module (62) according to any of the preceding claims, wherein
the control signals are of non-electronic, in particular mechanical and/or pneumatic and/or hydraulic form.

8. Module (62) according to any of the preceding claims, furthermore having:
- at least one interface for receiving wheel rotational speed signals, wherein
the module (62) is designed to jointly process the wheel rotational speed signals in the provision of the control signals.

9. Module (62) according to Claim 8, wherein
the module (62) is designed to, with the aid of the wheel rotational speed signals, provide control signals so as to prevent a locking of at least one wheel (1) as a consequence of a braking operation by means of a generated brake pressure of the vehicle.

10. Module (62) according to any of the preceding claims, wherein
the at least one interface which is designed for receiving a brake input is designed to receive the brake input through the first module (18) and/or through a vehicle network.

11. Redundancy system (56) for supplementing an electronic brake system (44) for a vehicle, having:
- a module (62) according to any of Claims 1 to 10,
- at least one processing unit (22, 24, 32) which is designed to generate at least one brake pressure not in electronically controlled fashion from a control signal,
- a second supply source (58), wherein
the redundancy system (56) is designed to be operated instead of the electronic brake system (44).

12. Redundancy system (56) according to Claim 11, wherein
the at least one processing unit (22, 24, 32) is designed to generate the at least one brake pressure mechanically and/or pneumatically and/or hydraulically, and/or
the redundancy system (56) is designed to ascertain a wheel rotational speed of at least one wheel of an axle by detection means and to take said wheel rotational speed into consideration in the provision of the control signal.

13. Electronically controlled brake system (80) for a vehicle, having:
- an electronic brake system (44) having a supply source (52) and having at least one processing unit (22, 24, 32) which is designed to electronically generate at least one brake pressure,
- a redundancy system (56) according to either of Claims 11 and 12, wherein
the brake system (80) is designed to provide brake pressures by means of the redundancy system (56) in the event of failure of the first supply source (52) or in the event of failure of the electronic brake system (44).

14. Electronically controlled brake system (80) for a vehicle according to Claim 13, wherein
at least one processing unit (22, 24, 32) of the redundancy system (56) and at least one processing unit (22, 24, 32) of the electronic brake system (44) is identical, and/or
the electronically controlled brake system (80) is designed to ascertain a wheel rotational speed of at least one wheel of an axle by detection means by way of the electronic brake system (44) and a wheel rotational speed of at least one wheel of an axle by detection means by way of the redundancy system (56).

15. Method for operating an electronically controlled brake system (80) according to Claims 13 or 14, having the following steps:
- providing brake pressures for the operation of the brake system (80) by means of an electronically controlled brake system (44),
- changing to a redundancy system (56), and providing the brake pressures by means of the redundancy system (56), if a fault situation has occurred in the electronic brake system (44).

16. Method according to Claim 15, wherein
the fault situation is the failure of the electronic brake system (44) or of the supply source (52) thereof.

## Revendications

1. Module (62) de mise à disposition de signaux de commande d'un système (80) de frein d'un véhicule, qui a une source (52) d'alimentation, comportant :
- au moins une interface (63), qui est constituée pour être reliée à une source (10, 12) d'air comprimé,
- au moins une interface (64, 65), qui est constituée pour transmettre les signaux de commande à au moins une unité (22, 24, 32) de traitement pour la production de pressions de frein, dans lequel
le module (62) est constitué pour être alimenté par une autre source (58) d'alimentation, dans lequel le module (62) comporte en outre
- au moins une interface (64a, 65a), qui est constituée pour recevoir des signaux de commande d'un premier module (18), et/ou
- au moins une interface, qui est constituée pour recevoir des entrées d'un conducteur,
- au moins une interface, qui est constituée pour transmettre les signaux de commande du premier module (18) à la au moins une unité (22, 24, 32) de traitement, **caractérisé en ce que**
le module (62) est constitué pour bloquer, dans un premier cas de défaut, des signaux de commande du premier module (18) et pour transmettre ses propres signaux de commande à au moins une unité (22, 24, 32) de traitement et, dans un deuxième cas de défaut, pour bloquer ses propres signaux de commande et pour transmettre les signaux de commande du premier module (18) à au moins une unité (22, 24, 32) de traitement.

2. Module (62) suivant la revendication 1, comportant en outre :
- des moyens de traitement, qui sont alimentés également par l'autre source (58) d'alimentation et qui sont constitués pour effectuer la commande du module (62), et/ou
- au moins une interface, qui est constituée pour la réception d'une entrée de frein.

3. Module (62) suivant la revendication 2, dans lequel
les moyens de traitement sont d'une seule pièce avec le module (62).

4. Module (62) suivant l'une des revendications précédentes, dans lequel
la au moins une interface, qui est constituée pour transmettre les signaux de commande du premier module (18) à la au moins une unité (22, 24, 32) de traitement, est identique à la au moins une interface (64, 65), qui est constituée pour transmettre les signaux de commande à au moins une unité (22, 24, 32) de traitement.

5. Module (62) suivant l'une des revendications précédentes, dans lequel
le premier cas de défaut est **caractérisé par** un effondrement de l'alimentation du système (80) de frein par la source (52) d'alimentation ou par une défaillance d'un système (44) primaire, et
le deuxième cas de défaut est **caractérisé par** un effondrement de l'alimentation du système (80) de frein par l'autre source (58) d'alimentation ou par une défaillance d'un système (56) de redondance.

6. Module (62) suivant l'une des revendications précédentes, dans lequel
l'alimentation s'effectue électriquement par la source (52) d'alimentation et par l'autre source (58) d'alimentation.

7. Module (62) suivant l'une des revendications précédentes, dans lequel
les signaux de commande sont appliqués d'une manière non électronique, en particulier d'une manière mécanique et/ou pneumatique et/ou hydraulique.

8. Module (62) suivant l'une des revendications précédentes, comportant en outre :
- au moins une interface de réception de signaux de vitesse de rotation d'une roue, dans lequel le module (62) est constitué pour traiter les signaux de vitesse de rotation d'une roue, lors de la mise en oeuvre des signaux de commande.

9. Module (62) suivant la revendication 8, dans lequel
le module (62) est constitué pour, à l'aide des signaux de vitesse de rotation d'une roue, mettre à disposition des signaux de commande, afin d'empêcher un blocage d'au moins une roue (1) à la suite d'un freinage par une pression de frein produite du véhicule.

10. Module (62) suivant l'une des revendications précédentes, dans lequel
la au moins une interface, qui est constituée pour la réception d'une entrée de frein, est constituée pour recevoir l'entrée de frein par le premier module (18) et/ou par un réseau du véhicule.

11. Système (56) redondant pour compléter un système (44) électronique de frein d'un véhicule, comportant :
- un module (62) suivant l'une des revendications 1 à 10,
- au moins une unité (22, 24, 32) de traitement, qui est constituée pour produire au moins une pression de frein, en étant commandée non électroniquement à partir d'un signal de commande,
- une deuxième source (58) d'alimentation, dans lequel le système (56) redondant est constitué pour être mis en fonctionnement au lieu du système (44) électronique de frein.

12. Système (56) redondant suivant la revendication 11, dans lequel
la au moins une unité (22, 24, 32) de traitement est constituée pour produire la au moins une pression de frein mécaniquement et/ou pneumatiquement et/ou hydrauliquement, et/ou
le système (56) de redondance est constitué pour déterminer une vitesse de rotation d'une roue d'au moins une roue d'un essieu par des moyens de détection et pour prendre en compte ceux-ci, lors de la mise à disposition du signal de commande.

13. Système (80) de frein, commandés électroniquement, d'un véhicule, comportant :
- un système (44) électronique de frein ayant une source (52) d'alimentation et au moins une unité (22, 24, 32) de traitement, qui est constituée pour produire électroniquement au moins une pression de frein,
- un système (56) de redondance suivant l'une des revendications 11 ou 12, dans lequel
dans lequel le système (80) de frein est constitué pour mettre à disposition, si la première source (52) d'alimentation est défaillance ou si le système (44) électronique de frein est défaillant, des pressions de frein par le système (56) de redondance.

14. Système (80) de frein, commandés électroniquement, d'un véhicule suivant la revendication 13, dans lequel
au moins une unité (22, 24, 32) de traitement du système (56) de redondance est identique à au moins une unité (22, 24, 32) de traitement du système (44) électronique de frein, et/ou
le système (80) de frein commandé électroniquement est constitué pour déterminer une vitesse de rotation d'une roue d'au moins une roue d'un essieu par des moyens de détection, par l'intermédiaire du système (44) électronique de frein et une vitesse de rotation d'une roue d'au moins une roue d'un essieu par des moyens de détection par l'intermédiaire du système (56) de redondance.

15. Procédé pour faire fonctionner un système (80) de frein commandé électroniquement suivant les revendications 13 ou 14, comportant les stades suivants :
- mise à disposition de pressions de frein pour faire le système (80) de frein par un système (44) de frein commandé électroniquement,
- passage à un système (56) de redondance et mise à disposition des pressions de frein par le système (56) de redondance, si un cas de défaut se produit dans le système (44) électronique de frein.

16. Procédé suivant la revendication 15, dans lequel
le cas de défaut est une défaillance du système (44) électronique de frein ou de sa source (52) d'alimentation.
